# EUROPEAN PATENT APPLICATION

(11) **EP 1 887 239 A1**
(43) Date of publication of application: **13.02.2008**
(21) Application number: 06380197.1
(22) Date of filing: 10.08.2006
(51) Int. Cl.: F16D 3/38

(54) **Crosshead assembly**

(71) Applicant: Pereira Carneiro Mac-Dowell, Joäo Augusto, Mairinque SP 18120-260 (BR)
(72) Inventor: Pereira Carneiro Mac-Dowell, Joäo Augusto, Mairinque SP 18120-260 (BR)
(74) Representative: Isern-Jara, Jaime

(57) **Abstract**

The present invention refers to a crosshead assembly, in the field of the machines elements, particularly auto parts, whereby the device consists of a genuine crosshead (10), clamps (20), which are assembled in the edges of the cardan axles (1) and (2) and receive the respective crosshead's (10) arms (12); lubricant (30); and seals (40); The crosshead comprises interfaces between the arms (12) and the clamps (20) without bearings; and the lubricant distribution is carried out by such interfaces (12-20), which lubricates when oscillations occur between the arms (12) and the respective clamps (20); the interface between an arm (12) and the respective clamp (20) comprises clamps (20) with an internal surface provided with ribs (50) interspersed by depressions (51); and crosshead's arms (12) provided with a cylindrical smooth surface (52) or vice-versa; ribs (50) touching the smooth surface (52) in tangent points (interface) (52)' and the depressions (51) housing lubricant (30), which touch sectors (52)" of the surface (52) limited between the tangent points (52)'.

## Description

This present descriptive report refers to an invention patent for a crosshead's assembly, belonging to the field of the machines' elements, particularly those of auto parts, and that received improvement to present a simpler construction than that of the usual similar crossheads.

Some crossheads' assemblies are already known, those oriented to provide an articulated link and to absorb oscillations between consecutive segments of the cardan axles; such crossheads comprised of, essentially, the genuine crosshead, which is disposed between the edges of the segments of consecutive axles and that are composed of, at least, four radial, orthogonal and coplanar arms, with a pair of opposed arms assembled in the edge of one of the axles and the other pair of opposed arms assembled in the edge of the other axle; and clamps, which are assembled in the edges of the segments of the consecutive axles and that receive, and in which they articulate, their respective crosshead's arms.

In the usual structure, between the surfaces of each crosshead's arm and the respective clamp, there is a system of bearing is foreseen, essentially formed by an assembly of parallel rollers disposed in the axial direction of the arm and of the clamp and disposed throughout the perimeter of the annular space between such clamp and the arm; with lubricant, which lubricates the surfaces of the clamp, rollers and crosshead's arm that are frictioning; and with a retainer that seals the entrance of the space between the crosshead's arm and clamp, in which the rollers and lubricant are disposed.

Although this structure of the crosshead's assembly is efficient, studies have been made to provide other options, which favor an efficient work, but which are simpler and less expensive than the conventional building, in a way of being suitable for certain applications that include minute demands, although the matter of cost is critical.

The improvement of the crosshead, object of the present patent, is the result of one of these studies. Thus, the crosshead's assembly, according to the present invention, is essentially comprised of the genuine crosshead disposed between the consecutive segments of the axle; of the clamps, which are assembled in the edges of the segments of axles and that receive, and in which they articulate, the respective arms of the crosshead; and, replacing the usual bearing system, in the present invention, the internal surfaces, for instance, of the clamps are provided of interspersed ribs and depressions, disposed in the radial direction/any other directions of the clamps and arms and these are provided with smooth surfaces; the said ribs touch the smooth surface of the arms, and the depressions house the lubricant and, also, the beginning of the space between each clamp and arm, in which the ribs, depressions and lubricant act, is closed by a simple seal, preferably called an O' ring.

In this way, when oscillations between the arms and the clamps take place, the ribs of the clamps drag, forward and backward, portions of lubricant housed in the depressions, forming a layer of lubricant around the cylindrical surface of each arm, which is comprised of alternate portions of lubricant, confined between the depressions of the clamp and alternate sectors of the surface of the arms; and by segments of a lubricant coat disposed between the portions of lubricants and between the ribs of the clamp and the surface of the arm; these segments of lubricant coat will lubricate the interface between the ribs of the clamp and the surface of the arm, favoring sliding and minimizing attrition and wear between parts.

As an option, instead of the clamps provide interspersed ribs and depressions and smooth surface arms, according to the previously stated, it can provide an opposed building, that's it, the crosshead's arms provided with ribs and depressions and the clamps with internal smooth surfaces.

However, this construction of the crosshead's assembly is only composed of the genuine crosshead, clamps and seals, which is simpler than the conventional building comprised of crosshead, clamps, rollers and seals.

The manufacturing process of the present crosshead is consequently simpler in relation to the conventional crosshead, not only for the fact of dispensing manufacturing of rollers, but also for the fact of dispensing the assembly of such rollers between the clamps and the arms of the, crosshead.

Another advantage provided by the present crosshead consists of the usage of seals, such as, for instance, O'rings, simpler than the retainers used in the usual crosshead.

The advantages of the above construction and manufacturing, as it couldn't be different, reflect positively in the final cost of the present crosshead in.relation to the conventional one, making it, under this aspect, more suitable for certain applications, in which efficiency is required, although the matter of cost is critical.

The enclosed drawings refer to the betterment of the crosshead's assembly, object of the present patent, in which:
figure 1 shows a crosshead in an exploded perspective, showing only one of the possible directions of the depressions of those required in this patent;
figure 2 shows a detail of a. clamp of the crosshead, isolated and in perspective drawing;
figure 3 shows a clamp in the perspective indicated in the previous figure;
figure 4 shows a clamp in the perspective indicated in the previous figure;
figure 5 shows an assembled crosshead's assembly and clamps and the indication on how it is applied a cardan axle;
figure 6 shows a detail cut of a clamp with a connected crosshead's arm;
figure 7 shows a detail cut of a clamp and an arm connected to another making reference to the interface points and to the layer of lubricant that acts between both;
figure 8 shows the same detail of the previous figure, but making reference to the angle between ribs and depressions of the clamp;
figure 9 shows a scheme between the consecutive cardam axles linked by a crosshead and referring to the angles of these axles; and
figure 10 shows another option of construction of the crosshead's assembly according to the present invention showing separate parts.

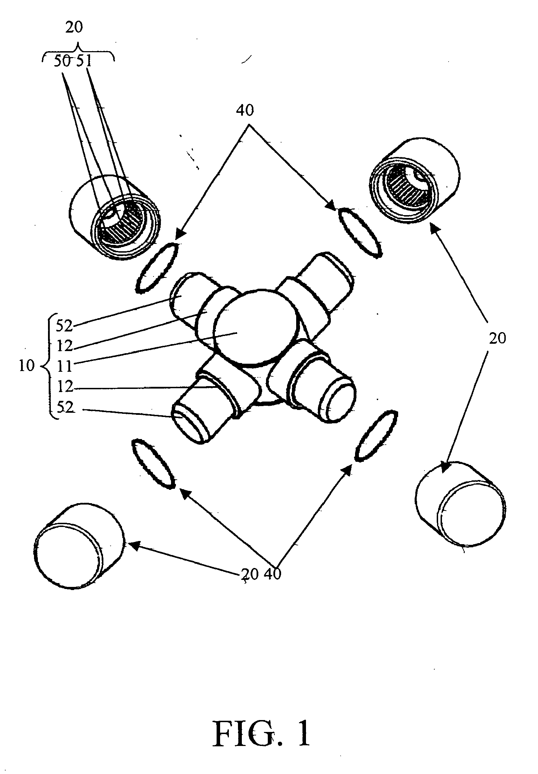

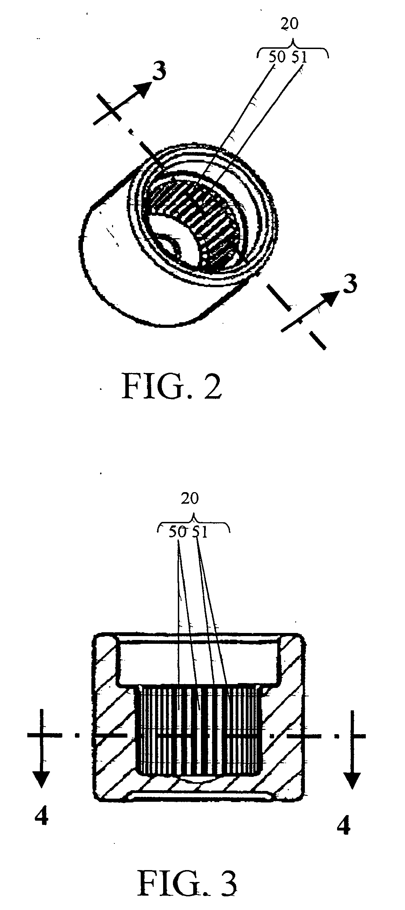

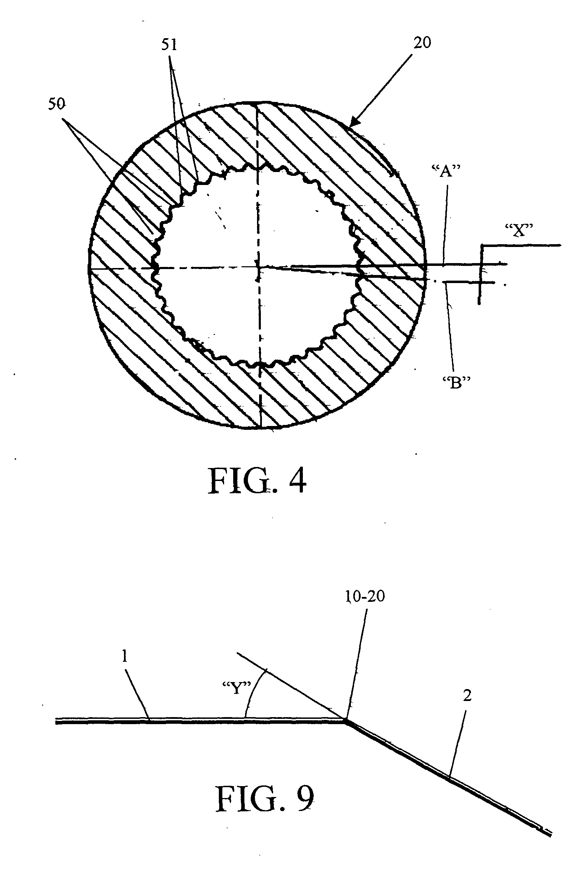

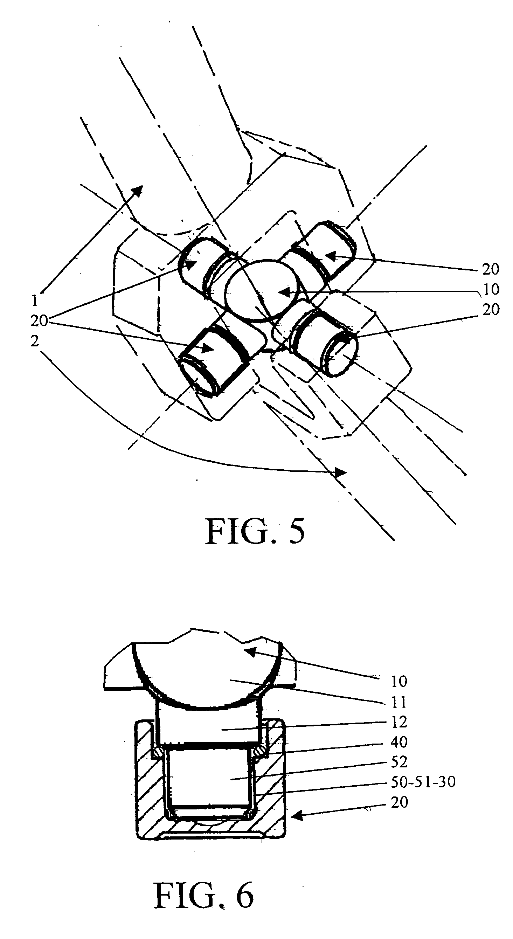

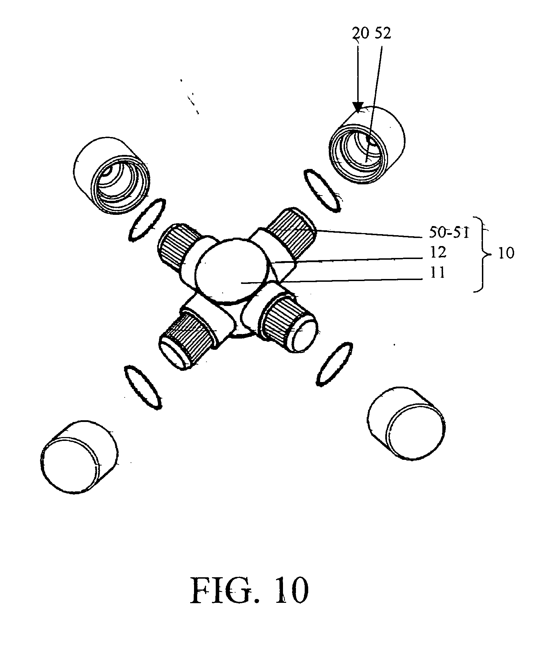

As provided in how illustrative are the figures related above, the crosshead, object of the present invention patent, is intended to link, transmit rotation and absorb oscillations between consecutive segments of the cardam axles 1 and 2 (figures 5 and 9); such crosshead's assembly is essentially comprises of (figures 1 to 6): a genuine crosshead 10, formed by a core. 11 and by two pairs of radial and coplanar arms 12 lingered from the core in such a way that the arms of a same pair are opposed one to another; clamps 20, which are assembled in the edges of the axles 1 and 2. and that receive and in which they articulate the respective arms. 12 of the crosshead 10; lubricant 30, which lubricates the interfaces between the clamps 20 and the arms 12; and seals 40 assembled in the clamps 20, around the arms 12 and that seal the entrances of the interface regions between clamps and arms.

The present betterment consists in providing a crosshead's assembly and clamp of a system that include interfaces between arms 12 and clamps 20 without bearings (fixed); and the operation of lubricant distribution that will be made by the said interfaces 12-20 without bearings and that will lub them when oscillations between arms. 12 and the respective clamps 20 occur.

Thus, the interface between an arm 12 and, the clamp 20 without bearings (fixed) is essentially comprised of clamp 20 with an internal surface provided with ribs 50 interspersed by depressions 51 both disposed in the surface in any direction of the clamp; and by the arm of the crosshead 12 provided with an smooth cylindrical surface 52; said ribs 50 touch the smooth surface 52 of the arm of the crosshead 12 in tangent points 52' and the depressions 51 house portions of lubricant 30, which touch sectors 52" of the arm 12 surface 52, limited between the tangent points 52'.

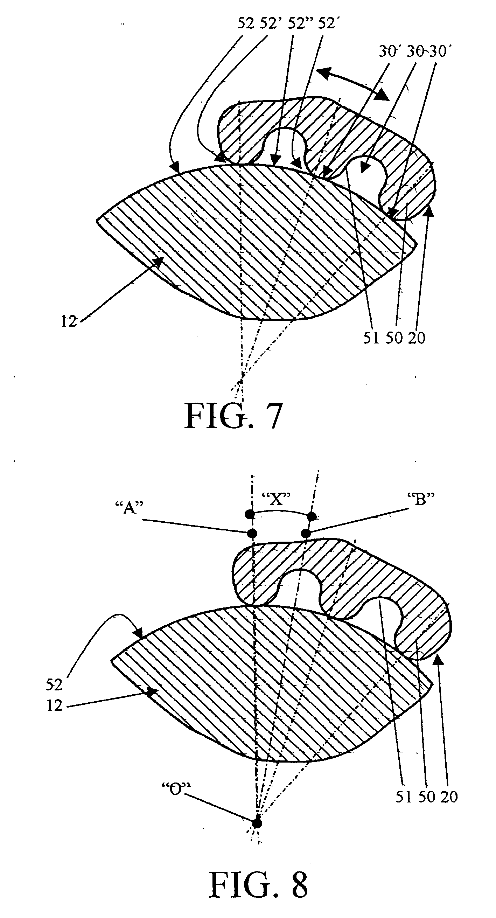

The operation of lubricant distribution made by and in the interfaces 12-20, without bearings, consists of:
I)- In the initial position (zero) of an oscillation, (figure 7), the ribs 50 of the clamp 20 present tangent to the smooth cylindrical surface 52 of the arm 12 in tangent points 52', and portions of lubricant 30 housed in the depressions 51 of the clamp 20 are presented in touch with sectors 52" of the surface 52 of the crosshead's arm 12 limited between the tangent points 52' and a layer of lubricant is showed composed of portions of lubricant 30 confined between the depressions 51 of the clamps 20 and the sectors 52" of the surface 52 of the arm 12 and segments of lubricant coat 30' interspersed between portions of lubricant 30 and disposed in the tangent points (interface) 52' between the ribs 50 of the clamp 20 and the surface 52 of the arm 12;
II)- Movement in the direction (forward) of oscillation, in which ribs. 50 of the clamp 20 drag portions of lubricant 30 from the depressions 51 of the clamp 20 around the surface 52 of the arm 12 until a final point of this forward movement and, throughout this movement, portions of lubricant 30 pour between the referred ribs 50 and surface 52, forming, between them, segments of lubricant coat 30' that lubricate interfaces between such ribs. 50 and surface 52;
III)- Movement in the opposed direction (backwards), in which the operation occurred in the forward movement is otherwise repeated and, in the end of this backwards movement, the set is ready to start a new cycle.

In a crosshead linking, two consecutive axles 1 and 2 (figure 9), the "x" angle (figure 8), between the Alfa plane, that passes through the apex 50' of a rib 50 and the point of the curvature's center "O" of the clamp 20; and the Beta plane, that passes through the deepest point 51' of a depression 51 immediately consecutive and through the curvature's center "O" of the clamp 20, is equal to the "y" angle between axles 1 and 2 linked by the crosshead.

The seal 40 is preferably understood as an O'ring.

Thus, the present crosshead works in the following manner: when there is not oscillations between the segments of the axle 1 and 2 linked by the crosshead and, however, there are no relative movements between the axles 12 of the crosshead 10 and clamps 20, there is not sliding of the ribs 50 and depressions 51 containing lubricant 30 of the clamps 20 in relation to the surfaces 52 of the crosshead's 10 arms 12, through which the ribs 50 and depressions 51 containing portions of lubricant 30 of the clamps 20 are radially aligned respectively to the tangent points 52' and sectors 52" of the surfaces 52 of the arms 12.

When there are oscillations, in forward movement, there is a relative movement between, at least, two opposed arms 12 and their respective opposed clamps 20, which make the ribs 50 and depressions 51 containing portions of lubricant 30 of the opposed clamps 20 and the surfaces 52 of the referred opposed arms 12 move ones in relation to the others, in a way that, throughout the movement, ribs 50 drag portions of lubricant 30 contained in depressions 51 and referred portions of lubricant 30 disposed opposite to the respective tangent points (interfaces) 52' between ribs 50 and surfaces 52, pour between the said tangent points 52', forming in these segments of lubricant coat 30', which lubricate the referred tangent points (interfaces) 52' minimizing friction, favoring sliding between ribs 50 and surfaces 52 until the end of the forward movement.

In the oscillation backward movement, the operation of forward movement is repeated in the opposite direction, and all the system gets back to the initial position and is ready to start a new cycle.

In the basic structure described above, the crosshead's assembly, purpose of the present invention patent, can present modifications related to materials, dimensions, constructive details and/or functional configuration and/or ornamental, maintaining the required scope of protection.

According to this, instead of the ribs 50 and depressions 51 disposed in the clamps 20 and the crosshead's 10 arms 12 with smooth surfaces 52, according to the first version described above, there is a cross construction (figure 10) comprised of ribs 50 and depressions 51 to be foreseen in the arms 12 of the crosshead 10 and the clamps 20 with internal smooth surfaces 52.

## Claims

1. "IMPROVEMENT IN A CROSSHEAD ASSEMBLY", for links between consecutive cardam axles (1) and (2) and comprised of: genuine crosshead (10); clamps (20), which are assembled in the edges of the axles (1) and (2) and that receive and in which articulate the respective crosshead's (10) arms (12); lubricant (30), which lubricates the interfaces between clamps (20) and arms (12); and seals (40), that seal the entrances of the interface regions between clamps and arms, **characterized by** the fact of bringing a system that includes interfaces between the arms (12) and the clamps (20) without bearings (fixed); the operation of lubricant distribution made by these interfaces (12)-(20) without bearings and that lubricate them when the oscillations between the arms (12) and respective clamps (20); such interface between the arm (12) and respective clamp (20) without bearings (fixed) is comprised, essentially of clamp (20) with an internal surface provided with ribs (50) interspersed with depressions (51) both disposed in any direction of the clamp; and the crosshead arm (12) provided with a cylindrical smooth surface (52); said ribs (50) touch the smooth surface (52) of the crosshead's arm (12) in tangent points (interface) (52)' and the depressions (51) house portions of lubricant (30), that touch with sectors (52)" of the arm's (12) surface (52) limited between the tangent points (52)'.

2. "IMPROVEMENT IN A CROSSHEAD ASSEMBLY", according to demand in item 1, **characterized by** the operation of lubricant distribution made by and in the interfaces (12)-(20) without bearings comprise II) movement in one direction (forward) from I)- initial position, in which clamps' (20) ribs (50) drag lubricant portions (30) from the depressions clamp's (20) depressions (51) around the surface (52) of the arm (12) until the final point of the forward movement and throughout this movement, the referred portions of lubricant (30) pour between ribs (50) and surface (52) forming, between them, segments of lubricant coat (30)' that lubricate the interfaces between ribs (50) and surface (52); and III)- movement in opposite direction (backwards), in which the forward movement operation is repeated until I)- initial position or others only in the opposite direction and to the end of the backwards movement, the assembly is ready to start a new cycle.

3. "IMPROVEMENT IN A CROSSHEAD ASSEMBLY", according to demand in item 1, **characterized by** the fact that, in a crosshead, the "x" angle between the Alfa plane, that passes through the apex (50)' of a rib (50) and through the curvature's center "0" of the clamp (20); and the Beta plane, that passes through the deepest point (51)' of a depression (51) immediately consecutive and through the curvature's center "O" of the clamp (20), is equal to the "y" angle between the axles (1) and (2) linked by the crosshead.

4. "IMPROVEMENT IN A CROSSHEAD ASSEMBLY", according to demand in item 1, **characterized by** seal (40), which is preferably comprised of an O'ring, assembled in the beginning of the clamp (20), between this one and crosshead's arm (12).

5. "IMPROVEMENT IN A CROSSHEAD ASSEMBLY", according to demand in item 1, **characterized by** ribs (50) and depressions (51) which come in the crosshead's (10) arms (12) and the clamps (20) with internal smooth surfaces (52).
